# EUROPEAN PATENT SPECIFICATION

(11) **EP 0 627 954 B1**
(45) Date of publication and mention of the grant of the patent: **17.04.1996**
(21) Application number: 92905561.4
(22) Date of filing: 25.02.1992
(51) Int. Cl.: B01D 57/02

(54) **PROCESS FOR ELECTROELUTION OF A GEL CONTAINING SEPARATED CHARGED MACROMOLECULES, SUCH AS PROTEINS OR DNA/RNA, AND AN APPARATUS AND MEANS FOR USE IN THE PROCESS**
VERFAHREN ZUR ELEKTROELUIERUNG VON EINEM GETRENNT GELADENEM MAKROMOLEKÜL, WIE PROTEINE UND DNA/RNA, ENTHALTENDEM GEL UND VORRICHTUNG UND MITTEL ZUR ANWENDUNG IM VERFAHREN
PROCEDE POUR L'ELECTROELUTION D'UN GEL CONTENANT DES MACROMOLECULES CHARGEES SEPAREES, TELLES QUE DES PROTEINES, DE L'ADN OU DE L'ARN, APPAREIL ET MOYENS POUR METTRE EN OEUVRE LE PROCEDE

(43) Date of publication of application: 14.12.1994
(73) Proprietor: ANDERSEN, Peter, DK-1304 Copenhagen K (DK)
(72) Inventor: ANDERSEN, Peter, DK-1304 Copenhagen K (DK)
(74) Representative: Christiansen, Ejvind
(86) International application number: PCT/DK92/00058
(87) International publication number: WO 93/16788

(56) References cited:
- EP-A- 0 361 062
- US-A- 4 181 594
- US-A- 4 608 147

## Description

The present invention concerns a novel process for electroelution of a gel containing separated charged macromolecules, such as proteins or DNA/RNA, and an apparatus and means for use in the process.

Electrophoresis of proteins or DNA/RNA in gels is widely used to separate compounds which differ in size and/or charge. Such compounds exhibit different migration distances and can be investigated by staining the gel or by transfer to a membrane suited for the study of antibody-antigen or other affinity interactions. Recovery of individual protein bands, however, is a laborious and time consuming procedure which generally has been based on cutting the gel into segments containing a single band, followed by homogenizing and elution, either by electroelution or by simple diffusion. Such a process is often ineffective and yields very high dilutions.

EP Published Application No. 0 361 062 discloses a method for electrophoretically separating, purifying and concentrating charged or polarized macromolecules, said method comprising the steps of separating the macromolecules in a separation column containing a plate or bar gel as support medium; migrating the separated macromolecules out of the support medium using electrophoretic current; feeding the separated macromolecules into a molecule detector; feeding the separated macromolecules from the molecule detector into a distributor; and collecting the separated macromolecules in a multielectrode collector, each of the electrodes of said collector being individually activatable by a signal from the molecule detector. This method requires a complicated system comprising a molecule detector and multielectrode collector for sequentially collecting the separated macromolecules.

US Patent Specification No. 3 956 099 discloses a complex system suited for continuous operations, which system separates components into separate compartments during the electrophoretic run. The procedure is not based on the elution of macromolecules already separated in a conventional gel, but includes instead a separating unit suited for large scale purification of proteins.

The processes and components described in US Patent Specifications No. 4 049 534, No. 4 725 348 and No. 4 747 918 are all suited for electroelution of small gel fragments containing single components. The procedure includes a preceeding localization and excision of the desired molecule, a technique which is time consuming and involves problems with respect to accuracy. The method is therefore not suited for the simultaneous investigation of all components separated in a gel.

EP Published Application No. 0 380 313 discloses a field inversion electroblotting and elution device specially suited for transfer of high molecular mass compounds. The procedure includes a preceeding identification of the band of interest and therefore has the same limitations as mentioned in relation to the methods described in the above-mentioned US Patent Specifications No. 4 049 534, No. 4 725 348 and No. 4 747 918.

US Patent Specification No. 4 181 594 discloses a matrix recovery apparatus wherein compounds contained in a slap gel are electroeluted directly upwards into multiple wells. Each compound is eluted into several wells separated by walls of a considerable thickness. This thickness presumably leads to an uneven and inefficient transfer. The wells are filled with different protein indicators. The apparatus does not involve a dialysis membrane and the products obtained therefore contain salts and detergents from the gel.

The Blotelutor® apparatus (manufactured by Biometra, Göttingen, Germany) provides a unit which is exclusively suited for the elution of proteins from two-dimensional gels. The proteins are eluted into wells separated by walls of a considerable thickness, which may lead to an uneven transfer. Furthermore, the method underlying this apparatus is not based on a physiological buffer and does not include a pre-equilibration step to ensure a fixed positioning of the gel during elution.

None of these prior systems meet the need for conventional, simultaneous elution of all compounds separated in a one-dimensional gel. A system with these features would greatly facilitate the biological and chemical screening procedure of complex protein/DNA mixtures.

It is the object of the present invention to provide a process for simultaneous elution of separated charged macromolecules such as DNA/RNA contained in a one dimensional gel, and to provide an apparatus and means for use in carrying out the process.

According to the process of the invention a simultaneous elution of the separated charged macromolecules, such as proteins, in an entire gel, such as a polyacrylamide or agarose gel, is performed as claimed in claim 1. Thus the separated charged macromolecules are divided into narrow fractions each containing single or closely located compounds, and the greater part of the present sodium dodecyl sulphate (SDS) is removed.

The novelty according to the process of the invention is the collective elution of an entire gel. As it appears from the afore-mentioned, the hitherto known methods have generally been based on a direct cutting of the gel matrix upon the termination of the electrophoresis. After homogenizing the material has been transferred to an electroelution apparatus. As mentioned such a method is very laborious and time consuming, especially in cases where a collective screening of the entire protein content of the gel is desirable (typically 20-30 individual fractions).

The present invention additionally provides an apparatus for use in carrying out for the simultaneous elution of all compounds separated in a whole gel by the process of the invention as claimed in claim 9. The unit very efficiently elutes ordinary gels (0.5-1 mm thick), but is also suitable for the elution of very thick gels (3-4 mm).

The process and the apparatus according to the inventions is explained more fully with reference to the figures wherein:
fig. 1 is a schematically view of a multichamber electroelution apparatus according to the invention;
fig. 2 is a photography of a gel eluted in an apparatus as shown in fig. 1 by means of the process according to the invention;
fig. 3 is a photograph showing the fractionation of a complex mixture of proteins by means of the electroelution apparatus shown in fig. 1.
Fig. 4 is a graphic representation showing the cellular responses to fractions from the multichamber electroelutor, and
fig. 5 is a graphic representation demonstrating that fractions from the multichamber electroelution apparatus are non-toxic.

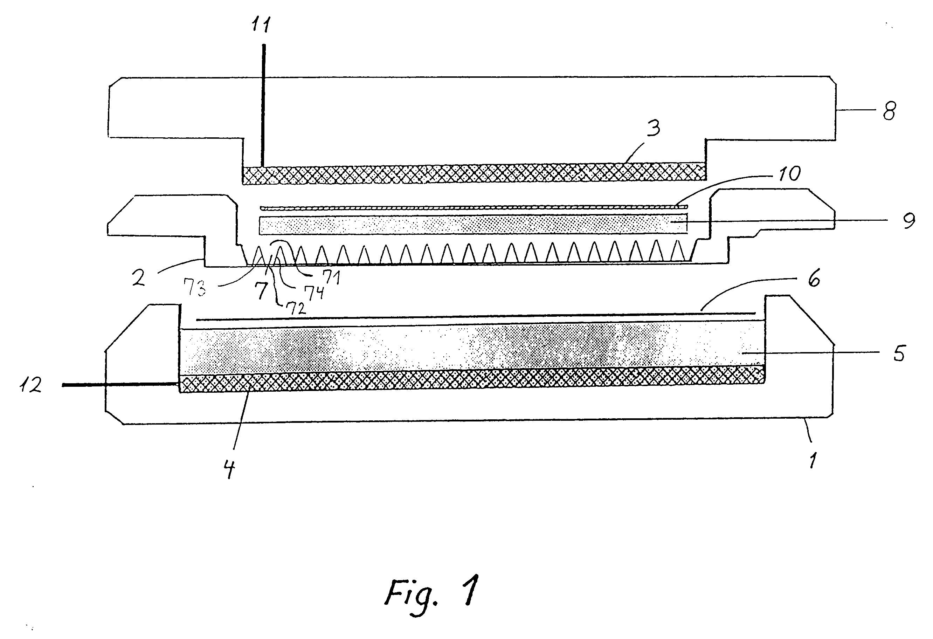

Referring now to fig. 1, a cut through the apparatus is shown. The entire instrument for carrying out the electroelution is constructed in a detergent resistant plastic material, except for the graphite electrodes and their terminals.

The apparatus is composed of a base (1) containing a graphite anode (4) and a sponge (5) filled with buffer. In the base is located a reservoir which receives excess buffer generated as the sponge is compressed during mounting of the frame (2). A sheet of a semipermeable membrane, such as a dialysis membrane, is placed on top of the sponge, and the frame is tightly connected to the base by means of finger screws. Optionally the dialysis membrane may be fixed to the sponge, e.g. by glueing. The graphite cathode (3) is built into a safety cover (8).

The frame contains multiple parallel chambers (7) of a trapezoidal shape consisting of a first open side (71), a second open side (72) which is shorter than the first open side (71) and opposite to it, and two closed sides (73,74) opposite each other, said chambers (7) being closed downwards by the close surface to surface contact with the dialysis membrane (6).

The volume of each chamber is less than 15 ml, preferably about 3 ml.

The frame contains an indentation in which the gel (9) is placed. A sheet of filter paper (10) wetted with buffer is preferably placed between the gel (9) and the graphite cathode (3).

A template which ensures a precise trimming of the gel according to the size of the indentation is a part of the unit.

The template is made of clear acrylic plastic and each well is indicated. The template is furthermore equipped with adjustment lines which are used to orientate the template before excision.

A voltage potential of about 40 volts is provided, and the power supply should be adjustable to provide such a voltage. The power supply is connected to the cathode (3) and the anode (4) by means of cables (11 and 12, respectively). Optionally the power supply can be built into the safety cover (8).

The necessary period for complete elution is generally between 8 and 15 minutes for a 0.75 mm gel. After elution the current is reversed for 10 seconds to loosen material sticking to the membrane. The product obtained is harvested by a plastic pipette through the harvesting side vents on the apparatus.

To start the electroelution process the gel containing the separated molecules is pre-equilibrated in a buffer, preferably for about 30-40 minutes. A preferred buffer, if the products are to be used in cellular assays, is a physiological buffer of low ionic strength, preferably a 2mM phosphate buffer (pH=6.5). During equilibration the gel will swell and obtain its final size, thereby ensuring a fixed positioning of the gel during elution. The buffer is changed three times to ensure the removal of excess salt and ionic detergents from the gel. The gel is removed from the buffer and placed on a clean glass plate, and then the part which is to be eluted is excised by the aid of the template. In the preferred use, gels are run with pre-stained molecular weight markers in the peripheral lanes. By aiming the template adjustment lines towards the markers a precise orientation and reproducible excision of the gel can be obtained. This method guarantees the important parallel course of gel bands and elution chambers.

The sponge in the base of the apparatus is filled with buffer. A dialysis membrane soaked in the buffer is placed on top of the sponge and the frame is mounted by means of the finger screws. The sponge functions as a support for the membrane and its compression ensures a tight closing of each chamber. The chambers are filled with buffer and the template is used to assist transfer of gels to the indentation of the frame. Two sheets of thick filter paper adjusted to the size of the gel are soaked in buffer and placed on top of the gel. The graphite cathode is mounted and a voltage potential of preferentially about 40 volts is provided. During the elution charged molecules will migrate from the gel into the buffer contained in the chambers. The upper part of the walls separating the trapezoidal chambers is sharply pointed to minimize any area of suboptimal transfer. Ionic detergents (SDS) will migrate towards the anode through the dialysis membrane, and then they can be effectively removed in the buffer. The period necessary for complete elution depends on the compounds under investigation and the gel matrix used, but is preferably between 8 and 16 minutes. The elution is followed by reversal of the current for a short period of time, preferentially about 10 seconds, to loosen molecules sticking to the membrane. After elution the product is recovered by aspirating with a pipette through the vents on the side of the frame. After harvesting of the product the apparatus is disassembled and the gel is stained for protein/DNA to check whether the transfer was complete. Before the product is used in cellular assays all fractions are made isotonic by addition of a sufficient volume of PBS x 10.

A different aspect of the present invention is the use of this apparatus for the simultaneous electroelution and electroblotting. In accordance with this aspect a sheet of suitable membrane is inserted in one side of the apparatus, thereby covering a variable part of all chambers. In this way molecules can be transferred into solution and simultaneously blotted onto a membrane. In a preferred form T cell reactivity and antibody response towards separated protein mixtures can be investigated simultaneoulsy in a simple and accurate way.

In accordance with another aspect of the present invention there is provided a method for purification of single compounds in a simple and quick way. This method comprises the step of removing a narrow strip of gel or electroblotted membrane containing the separated material and localizing the compounds of interest by staining or by reaction with specific probes, which in a preferred embodiment could be monoclonal antibodies. Each elution chamber is indicated on the membrane by impressions from the pointed chamber walls. If a gel strip is stained, a number of 2-3 mm holes are punched to indicate the localization of the elution chambers. A precise punching is easily done by the aid of the template which carry a precise marking for each elution chamber. These reference strips enable a precise identification of the chamber which contains the relevant compound.

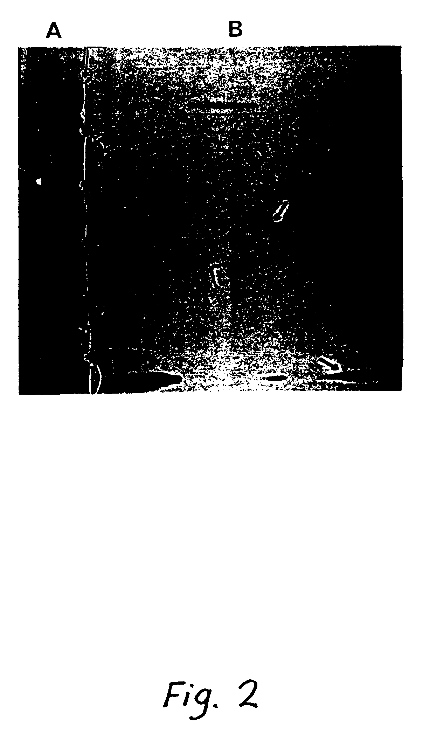

As it appears from fig. 2, the process and the apparatus according to the invention provides effective elution of all parts of the gel. The gel is divided into two areas, A and B:

Part A of the gel was removed before elution and stained for protein.

The eluted gel (part B) was stained for protein after termination of the elution process to evaluate if the transfer was complete.

In the gel are seen narrow faint lines indicating the location of chamber wall edges, and two blurred areas in the bottom of the gel. These findings emphasize two important findings:
1: the sharply pointed chamber walls minimize the areas of suboptimal transfer.
2: Air bubbles underneath the gel will interfere with the protein transfer.

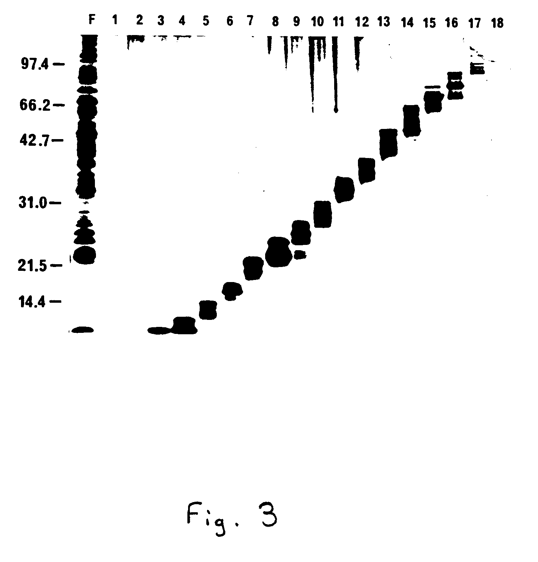

The photograph in fig. 3 shows the fractionation of a complex mixture of proteins. Mycobacterium tuberculosis culture filtrate was separated in 10-20% SDS-PAGE and fractionated with the multichamber electroelution apparatus of the invention. The filtrate and the obtained fractions were analyzed by SDS-PAGE and silver staining.

Lane F is the Mycobacterium tuberculosis filtrate. Lanes 1-18 are the fractions 1 through 18.

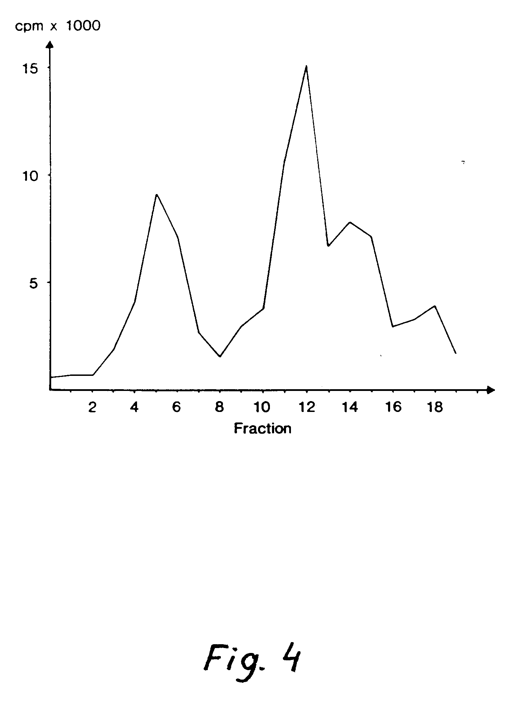

Fig. 4 shows the proliferative responses of spleen lymphocytes obtained from mice infected with M. tuberculosis. The cells were grown in cultures stimulated with fractions of M. tuberculosis culture filtrate in a dilution of 1:5. The proliferative response obtained with intact filtrate was 18600 cpm and the response of unstimulated cells was 500 cpm, the proliferation being measured by liquid scintillation counting of ³H thymidine incorporation in the DNA of proliferative cells.

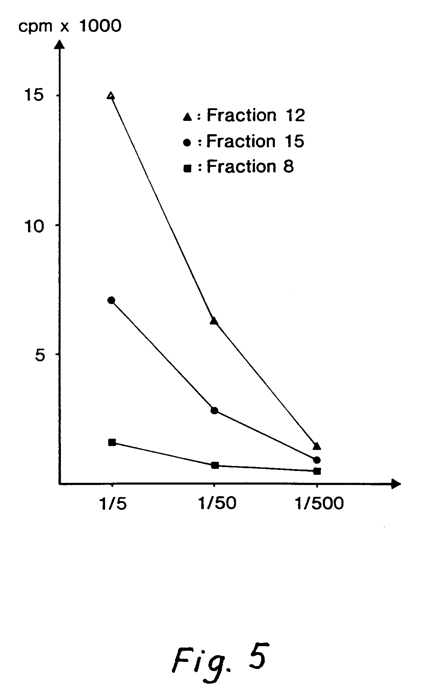

From fig. 5 it appears that the fractions from the multichamber electroelution apparatus according to the invention are non-toxic.

Low, medium and high stimulatory fractions from the multichamber electroelution apparatus were investigated in dilutions ranging from 1:5 to 1:500. All fractions exhibited a positive dose-response relationship, i.e. the higher dose gave a higher proliferative response. These results emphasize the non-toxic character of products from the electroelution apparatus.

As it appears from the afore-mentioned, the process and the apparatus according to the invention provide several great advantages:
First of all it is possible in a quick and simple way to obtain a simultaneous elution of all components separated in a one-dimensional gel which as a routine is commonly used. Moreover it is possible to use one-dimensional gels of varying thickness ensuring maximum flexibility of the invention. The electroelution apparatus can therefore form a part of an ordinary protein purification procedure and the yield can be quantitatively and qualitatively analyzed.

The trapezoidal wells provide an even transfer of all protein bands.

Stretching of the separation frame against a sponge works as an efficient packing easy to handle.

The buffer is non-toxic and free of chloride ions which might otherwise cause problems during the elution. The same buffer is used in all parts of the electroelution apparatus, which is labor saving.

Upon completed elution it is possible to suck out the product without having to disassemble the machine. This secures a high degree of purity. The product is completely non-toxic and therefore suited for a number of different purposes.

Finally, it should be mentioned that the used template ensures an accurate and reproducible fractionation.

## Claims

1. A process for electroelution of a gel containing separated charged macromolecules such as proteins or DNA/RNA; said process comprising the steps of:
(a) placing the gel onto the first open sides (71) of a number of adjacent parallel chambers (7), each chamber having a trapezoidal cross-section and consisting of a first open side (71), a second open side (72) which is shorter than the first open side (71) and opposite to it, and two closed sides (73,74) opposite to each other;
(b) placing a semipermeable membrane onto the second open sides (72) of said chambers (7);
(c) filling the closed chambers (7) with an elution buffer; and
(d) applying a voltage difference over the chambers (7) so that separated charged macromolecules in the gel migrate into the elution buffers in the chambers.

2. A process according to claim 1,
**characterized** in that the two closed sides (73,74) of one chamber form sharp triangles with the two closed adjacent sides of the adjacent chambers.

3. A process according to claim 1,
**characterized** in that the gel (9) is placed so that the gel bands and the chambers are parallel.

4. A process according to claim 1,
**characterized** in that the voltage potential difference is applied for a period long enough to remove ionic detergents from the elution buffer through the semipermeable membrane (6), preferably a period between 8 and 16 minutes.

5. A process according to claim 1,
**characterized** in that following the elution the voltage potential difference is reversed for a short period of time, preferably a period of about 10 seconds.

6. A process according to claim 1,
**characterized** in that the elution buffer has a low ionic strength.

7. A process according to claim 6,
**characterized** in that the elution buffer is a phosphate buffer of about 2mM.

8. A process according to claim 1 for simultaneous electrolution and electroblotting of separated charged macromolecules, **characterized** in that a variable part of all chambers are covered with a suitable membrane for blotting of the molecules thereon.

9. An apparatus for use in carrying out the process as claimed in claim 1, **characterized** in that it comprises:
a) a base (1) comprising:
i) a graphite anode (4),
ii) a sponge (5) to be filled with a buffer,
iii) a semipermeable membrane (6) placed on top of said sponge (5), and
iv) a reservoir for receiving excess buffer from the sponge (5);
b) a frame (2) comprising:
i) a number of adjacent parallel chambers (7), each chamber having a trapezoidal cross-section and consisting of a first open side (71), a second open side (72) which is shorter than and opposite to the first open side (71), and two closed sides (73,74) opposite to each other;
said second open side (72) being closed by the semipermeable membrane (6) when the frame (2) is connected to the base (1); and
ii) an indentation for receiving the gel (9); and
c) a safety cover (8) comprising a graphite cathode (3);
said gel (9) closing the first open side of the chambers (7) when the safety cover (8), the frame (2) and the base (1) are connected.

10. An apparatus according to claim 9,
**characterized** in that the two closed sides (73,,74) of one chamber form sharp triangles with the two closed adjacent sides of the adjacent chambers.

11. The apparatus according to claim 9,
**characterized** in that the frame (2) further comprises side vents for aspirating the recovered product.

12. The apparatus according to claim 9,
**characterized** in that the safety cover (8) further comprises a power supply which is able to reverse the current automatically.

13. The apparatus according to claim 9,
**characterized** in that it further comprises a membrane for simultaneous elution and blotting.

14. A template for use in precise trimming of a gel according to the size of the indentation of the frame (2) of the apparatus as claimed in claim 9,
**characterized** in that it further comprises:
adjustment lines for orientation of the template before excision, and
chamber identifications corresponding to the molecules of interest to be contained in each chamber.

## Patentansprüche

1. Verfahren zur Elektroeluierung von einem getrennt geladene Makromoleküle wie etwa Proteine oder DNA/RNA enthaltenden Gel, wobei das Verfahren die Schritte umfaßt:
(a) Auflegen des Gels auf die ersten offenen Seiten (71) einer Anzahl von benachbarten parallelen Kammern (7), von denen jede einen trapezoiden Querschnitt aufweist und aus einer ersten offenen Seite (71), einer zweiten offenen Seite (72), welche kürzer ist als die erste offene Seite (71) und dieser gegenüber liegt, sowie zwei einander gegenüberliegenden geschlossenen Seiten (73, 74) besteht;
(b) Auflegen einer semipermeablen Membran auf die zweiten offenen Seiten (72) der Kammer (7);
(c) Füllen der geschlossenen Kammern (7) mit einem Eluierungspuffer; und
(d) Anlegen einer Spannungsdifferenz über die Kammern (7), so daß die getrennt geladenen Makromoleküle in dem Gel in die Eluierungspuffer in den Kammern wandern.

2. Verfahren nach Anspruch 1,
**dadurch gekennzeichnet, daß**
die beiden geschlossenen Seiten (73, 74) der einen Kammer mit den beiden geschlossenen benachbarten Seiten der benachbarten Kammern spitze Dreiecke bilden.

3. Verfahren nach Anspruch 1,
**dadurch gekennzeichnet, daß**
das Gel (9) derart aufgelegt wird, daß die Gel-Banden und die Kammern parallel zueinander liegen.

4. Verfahren nach Anspruch 1,
**dadurch gekennzeichnet, daß**
die Spannungspotentialdifferenz so lange, vorzugsweise für eine Dauer zwischen 8 und 16 Minuten angelegt wird, daß ionische Detergenzien über die semipermeable Membran (6) entfernt werden.

5. Verfahren nach Anspruch 1,
**dadurch gekennzeichnet, daß**
im Anschluß an die Eluierung die Spannungspotentialdifferenz für eine kurze Zeitspanne, vorzugsweise etwa 10 Sekunden lang, umgekehrt wird.

6. Verfahren nach Anspruch 1,
**dadurch gekennzeichnet, daß**
der Eluierungspuffer niedrige Ionenstärke aufweist.

7. Verfahren nach Anspruch 6,
**dadurch gekennzeichnet, daß**
es sich bei dem Eluierungspuffer um einen etwa 2mM-Phosphatpuffer handelt.

8. Verfahren nach Anspruch 1 zum simultanen Elektroeluieren und Durchführen der Elektroblotting-Technik von getrennt geladenen Makromolekülen,
**dadurch gekennzeichnet, daß** ein variabler Teil aller Kammern mit einer zum Durchführen der Blotting-Technik von Molekülen geeigneten Membran bedeckt ist.

9. Vorrichtung zur Verwendung bei der Durchführung des Verfahrens nach Anspruch 1,
**dadurch gekennzeichnet, daß**
diese umfaßt:
a) einen Grundkörper (1) mit:
i) einer Graphitanode (4),
ii) einem mit einem Puffer zu tränkenden Schwamm (5),
iii) einer oben auf dem Schwamm (5) befindlichen semipermeablen Membran (6) sowie
iv) einem Auffangbehälter zum Auffangen überschüssigen Puffers des Schwamms (5);
b) einen Rahmen (2) mit:
i) einer Anzahl von benachbarten parallelen Kammern (7), von denen jede einen trapezoiden Querschnitt aufweist und aus einer ersten offenen Seite (71), einer zweiten offenen Seite (72), die kürzer ist als die erste offene Seite (71) und ihr gegenüber liegt, sowie zwei einander gegenüber liegenden geschlossenen Seiten (73, 74) besteht,
wobei die zweite offene Seite (72) durch die semipermeable Membran (6) geschlossen wird, wenn der Rahmen (2) mit dem Grundkörper (1) verbunden wird, und
ii) einer Vertiefung zum Aufnehmen des Gels (9); und
c) eine Sicherheitsabdeckung (8), die eine Graphitkathode (3) umfaßt;
wobei das Gel (9) die erste offene Seite der Kammern (7) abschließt, wenn die Sicherheitsabdeckung (8), der Rahmen (2) und der Grundkörper (1) miteinander verbunden werden.

10. Vorrichtung nach Anspruch 9,
**dadurch gekennzeichnet, daß**
die beiden geschlossenen Seiten (73, 74) der einen Kammer mit den beiden geschlossenen benachbarten Seiten der benachbarten Kammern spitze Dreiecke bilden.

11. Vorrichtung nach Anspruch 9,
**dadurch gekennzeichnet, daß**
der Rahmen (2) desweiteren seitliche Entlüftungen umfaßt, um das wiedergewonnene Produkt zu aspirieren.

12. Vorrichtung nach Anspruch 9,
**dadurch gekennzeichnet, daß**
die Sicherheitsabdeckung (8) desweiteren eine Stromzufuhr umfaßt, die in der Lage ist, den Strom automatisch umzukehren.

13. Vorrichtung nach Anspruch 9,
**dadurch gekennzeichnet, daß**
sie desweiteren eine Membran zur Durchführung von simultanem Eluieren und der Blotting-Technik umfaßt.

14. Schablone zur Verwendung beim präzisen Anpassen eines Gels an die Größe der Vertiefung im Rahmen (2) der Vorrichtung nach Anspruch 9,
**dadurch gekennzeichnet, daß**
sie desweiteren umfaßt:
Anpassungslinien zur Ausrichtung der Schablone vor dem Ausschneiden sowie
Kammeridentifizierungs-Einrichtungen, die den in jeder Kammer enthaltenen Molekülen von Interesse entsprechen.

## Revendications

1. Procédé d'électroélution d'un gel contenant des macromolécules chargées séparées, telles que des protéines ou de l'ADN/ARN ; ledit procédé comprenant les étapes consistant à :
(a) placer le gel sur le premier côté ouvert (71) d'un certain nombre de chambres parallèles adjacentes (7), chaque chambre ayant une section transversale trapézoïdale et étant constituée d'un premier côté ouvert (71), d'un second côté ouvert (72) dont la longueur est inférieure à celle du premier côté ouvert (71) et qui est opposé à ce dernier, et deux côtés fermés (73,74) opposés entre eux ;
(b) placer une membrane semi-perméable sur le second côté ouvert (72) desdites chambres (7) ;
(c) remplir les chambres fermées (7) avec un tampon d'élution ; et
(d) appliquer une différence de potentiel aux chambres (7), de façon que les macromolécules chargées séparées présentes dans le gel migrent dans les tampons d'élution situés dans les chambres.

2. Procédé selon la revendication 1, caractérisé par le fait que les deux côtés fermés (73,74) d'une chambre forment des triangles à angle aigü avec les deux côtés adjacents fermés des chambres adjacentes.

3. Procédé selon la revendication 1, caractérisé par le fait que le gel (9) est placé de façon que les bandes de gel et les chambres soient parallèles.

4. Procédé selon la revendication 1, caractérisé par le fait que la différence de potentiel est appliquée pendant une période suffisamment longue pour éliminer les détergents ioniques du tampon d'élution à travers la membrane semi-perméable (6), de préférence pendant une période comprise entre 8 et 16 minutes.

5. Procédé selon la revendication 1, caractérisé par le fait qu'après l'élution, la différence de potentiel est inversée pendant une brève période, de préférence pendant une période d'environ 10 secondes.

6. Procédé selon la revendication 1, caractérisé par le fait que le tampon d'élution présente une faible force ionique.

7. Procédé selon la revendication 6, caractérisé par le fait que le tampon d'élution est un tampon phosphate à environ 2 mM.

8. Procédé selon la revendication 1, pour l'électroélution et la réalisation d'une empreinte par électrophorèse simultanées de macromolécules chargées séparées, caractérisé par le fait qu'une partie variable de toutes les chambres est recouverte d'une membrane appropriée pour la réalisation sur celle-ci d'une empreinte avec les molécules.

9. Dispositif destiné à la mise en oeuvre du procédé revendiqué à la revendication 1, caractérisé par le fait qu'il comprend :
a) une base (1) comprenant :
i) une anode en graphite (4),
ii) une éponge (5) qui doit absorber le tampon,
iii) une membrane semi-perméable (6) placée au-dessus de ladite éponge (5), et
iv) un réservoir destiné à recevoir le tampon en excès de l'éponge (5) ;
b) un cadre (2) comprenant :
i) un certain nombre de chambres parallèles adjacentes (7), chaque chambre ayant une section transversale trapézoïdale et étant constituée d'un premier côté ouvert (71), d'un second côté ouvert (72) dont la longueur est inférieure à celle du premier côté ouvert (71) et qui est opposé au premier côté ouvert (71), et de deux côtés fermés (73,74) opposés entre eux ; ledit second côté ouvert (72) étant fermé par la membrane semiperméable (6) lorsque le cadre (2) est raccordé à la base (1) ; et
ii) un renfoncement destiné à recevoir le gel (9) ; et
c) un couvercle de sécurité (8) comprenant une cathode en graphite (3) ;
ledit gel (9) fermant le premier côté ouvert des chambres (7) lorsque le couvercle de sécurité (8), le cadre (2) et la base (1) sont raccordés.

10. Dispositif selon la revendication (9), caractérisé par le fait que les deux côtés fermés (73,74) d'une chambre forment des triangles à angle aigü avec les deux côtés fermés adjacents des chambres adjacentes.

11. Dispositif selon la revendication (9), caractérisé par le fait que le cadre (2) comprend en outre des orifices latéraux destinés à aspirer le produit récupéré.

12. Dispositif selon la revendication (9), caractérisé par le fait que le couvercle de sécurité (8) comprend en outre une source d'énergie qui est capable d'inverser automatiquement le courant.

13. Dispositif selon la revendication (9), caractérisé par le fait qu'il comprend en outre une membrane pour l'élution et la réalisation d'une empreinte simultanées.

14. Matrice destinée au découpage précis d'un gel suivant la taille du renfoncement du cadre (2) du dispositif de la revendication (9),
caractérisé par le fait qu'il comprend en outre :
des lignes d'ajustement destinées à l'orientation de la matrice avant l'excision, et
des chambres d'identification correspondant aux molécules concernées qui doivent être contenues dans chaque chambre.
